# FASCICULE DE BREVET EUROPEEN

(11) **EP 0 808 260 B1**
(45) Date de publication et mention de la délivrance du brevet: **27.10.1999**
(21) Numéro de dépôt: 96941081.0
(22) Date de dépôt: 29.11.1996
(51) Int. Cl.: B60S 1/04

(54) **PLATINE SUPPORT D'UN MECANISME D'ESSUIE-GLACE**
TRÄGERPLATTE EINES SCHEIBENWISCHER-MECHANISMUS
SUPPORTING BASE FOR A WIPER MECHANISM

(30) Priorité: 07.12.1995 FR 9514672
(43) Date de publication de la demande: 26.11.1997
(73) Titulaire: VALEO SYSTEMES D'ESSUYAGE, 78321 La Verrière (FR)
(72) Inventeur: MORIN, Pascal, F-86100 Chatellerault (FR); PRINCET, Joel, F-86100 Chatellerault (FR)
(74) Mandataire: Gamonal, Didier
(86) Numéro de dépôt international: FR9601897
(87) Numéro de publication internationale: WO9720715

(56) Documents cités:
- EP-A- 0 484 175
- EP-A- 0 689 975
- DE-A- 3 741 172
- DE-A- 4 333 484
- GB-A- 2 218 622

## Description

La présente invention concerne une platine-support d'un mécanisme d'essuie-glace.

L'invention concerne plus particulièrement une platine-support, du type comportant une plaque formant support pour divers composants du mécanisme d'essuie-glace, notamment pour des organes d'entraînement d'un essuie-glace, qui comprend des moyens pour sa fixation sur un élément de la caisse du véhicule, et du type comportant au moins un élément de structure de forme allongée fixé à la platine-support et dont un tronçon d'extrémité libre porte par exemple un palier de support pour un arbre d'essuie-glace et/ou des moyens complémentaires pour la fixation de la platine-support sur la caisse du véhicule.

Selon une conception connue, qui est par exemple décrite et représentée dans le document FR-A-2.621.287, la plaque support est réalisée sous la forme d'une plaque de tôle pliée, découpée, renforcée par des nervures et dont un bord latéral est incurvé pour constituer un logement semi-cylindrique ouvert qui reçoit un tronçon tubulaire de forme complémentaire de l'élément de structure allongé, qui est par exemple réalisé sous la forme d'un tube coudé et cintré, l'élément de structure étant fixé au bord incurvé de la plaque support métallique par soudage.

Un bord opposé de la plaque support en une seule pièce comporte des prolongements ou des portions déformées qui reçoivent des éléments de fixation tels que par exemple des silentblocs.

La réalisation, et notamment la conformation dans l'espace, de la plaque support en tôle est particulièrement complexe car les éléments de fixation doivent être agencés dans l'espace dans des positions relativement précises permettant la fixation de la plaque support sur des composants environnants de la caisse du véhicule.

De plus, la conception connue en une seule pièce de la plaque support nécessite de réaliser une plaque support spécifique pour chaque application, c'est-à-dire notamment pour chaque véhicule.

La présente invention a pour but de proposer une nouvelle conception d'une platine-support du type mentionné précédemment qui remédie aux inconvénients qui viennent d'être évoqués et qui permet notamment de standardiser les composants de la platine-support tout en en simplifiant la réalisation.

Dans ce but, l'invention propose une platine-support du type selon FR-A-2 621 287 caractérisée en ce que la plaque support est réalisée sous la forme de deux plaques superposées dont la première plaque est fixée à l'élément de structure et dont la seconde plaque comporte les moyens pour la fixation de la platine-support sur un élément de la caisse du véhicule, et en ce que la platine-support comporte des moyens de liaison des deux plaques.

Selon des modes de réalisation de l'invention :
- les moyens de liaison des deux plaques sont constitués par des moyens d'assemblage, notamment du type vis-écrou, pour le montage sur la plaque-support d'un organe d'entraînement de l'essuie-glace dont les corps traversent les deux plaques superposées ;
- l'organe d'entraînement est un motoréducteur d'entraînement monté sur la platine par une série d'ensembles du type vis-écrou répartis autour d'un trou, formé dans les deux plaques superposées, pour le passage de l'arbre de sortie du groupe motoréducteur ;
- la première plaque s'étend sensiblement dans un plan et se prolonge par une portion latérale pour sa fixation sur l'élément de structure ;
- la portion latérale de fixation de la première plaque est conformée pour épouser au moins en partie la forme de l'élément de structure sur lequel elle est fixée ;
- la seconde plaque s'étend sensiblement dans un plan et se prolonge par une patte latérale pour sa fixation sur la caisse du véhicule ;
- la patte latérale de fixation de la seconde plaque s'étend dans un plan sensiblement perpendiculaire à celui de la plaque support ;
- un élément amortisseur est interposé entre les deux plaques superposées ;
- l'élément amortisseur est réalisé sous la forme d'une plaque en matériau élastomère interposée entre des portions complémentaires des faces en vis-à-vis des deux plaques superposées ;
- l'élément amortisseur comporte des orifices pour le passage des corps des moyens d'assemblage ;
- l'élément amortisseur comporte un trou pour le montage de l'arbre de sortie du groupe motoréducteur ;
- la plaque support comporte un logement qui reçoit un tronçon de l'élément de structure et le logement est constitué par deux demi-logements dont chacun est formé dans l'une des deux plaques superposées et s'ouvre dans le plan de joint des deux plaques superposées.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique en perspective, avec un arrachement partiel, illustrant une platine-support d'un mécanisme d'essuie-glace réalisé conformément aux enseignements de l'invention, en association avec certains autres composants du mécanisme ; et
- la figure 2 est une vue en perspective éclatée des principaux composants de la platine-support illustrée à la figure 1.

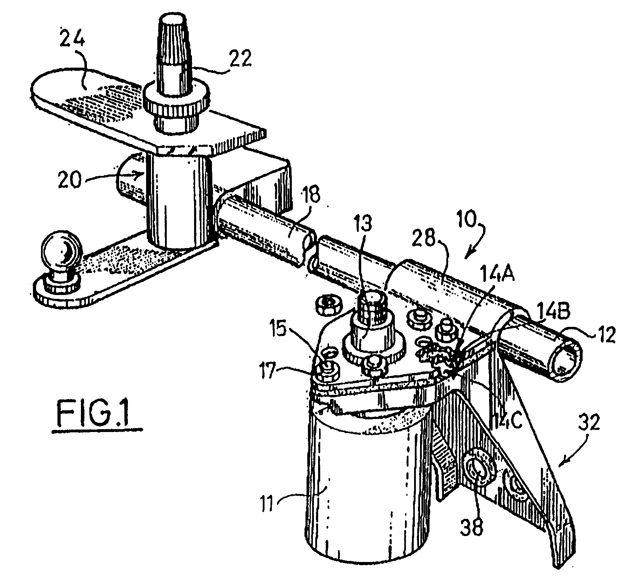

On a représenté sur la figure 1 une platine-support 10 qui, selon une conception connue, est constituée pour l'essentiel par un élément de structure de forme générale allongée 12 qui est ici constitué par un tube métallique cintré et coudé.

La platine-support 10 comporte aussi une plaque 14 servant de support à des organes d'entraînement d'un essuie-glace qui comportent par exemple un groupe motoréducteur 11.

La plaque support 14 est fixée sur le tube de structure 12 et elle comporte des moyens 16 pour la fixation de la platine-support 10 sur des composants de la structure de la caisse du véhicule (non représentée) équipée du mécanisme d'essuie-glace.

Comme cela est illustré sur la figure 1, chacune des extrémités 18 du tube de structure 12 peut être équipée, sous la forme d'un élément rapporté, d'un palier 20 recevant à rotation un arbre 22 d'entraînement en balayage alterné d'un essuie-glace, le palier 20 comportant une plaque 24 pour sa fixation sur la caisse du véhicule.

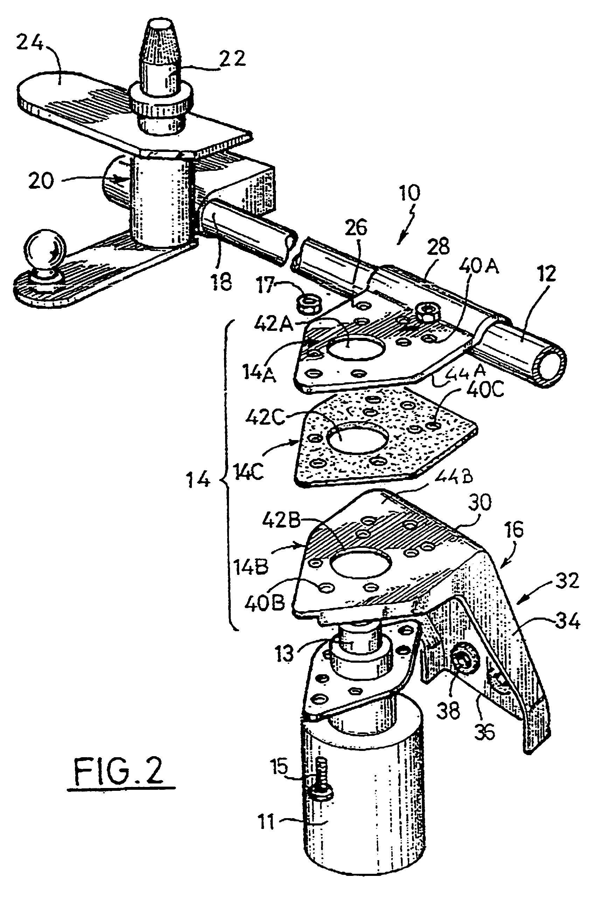

Conformément aux enseignements de l'invention, et comme on peut le voir plus en détail sur la figure 2, la plaque support 14 est réalisée en deux parties sous la forme d'une première plaque 14A et d'une seconde plaque 14B.

La première plaque 14A est par exemple une pièce en tôle découpée en forme générale de plaque et dont un bord latéral 26 se prolonge par une portion latérale 28 de profil semi-cylindrique qui est fixée sur le tube de structure 12, par exemple par soudage, selon une technique connue.

La première plaque 14A avec le tube de structure 12 constitue ainsi un premier sous-ensemble de la platine-support 10.

La seconde plaque 14B est aussi une pièce en tôle découpée et pliée en forme de plaque et dont le contour est sensiblement identique au contour de la partie principale de la première plaque 14A.

La seconde plaque 14B se prolonge, à partir de l'un de ses bords latéraux 30, par une patte de fixation 32 qui s'étend dans un plan sensiblement perpendiculaire au plan général de la seconde plaque 14B et qui est ici réalisée venue de matière en une seule pièce avec la seconde plaque 14B par pliage, emboutissage, découpage et/ou soudage.

La rigidité de la liaison entre la seconde plaque 14B et la patte latérale de fixation 32 est renforcée par des nervures 34.

Au voisinage de son bord d'extrémité libre 36, la patte de fixation 32 comporte des éléments 38, de conception connue, pour la fixation de la seconde plaque 14B sur la caisse du véhicule.

Les éléments 38 sont par exemple des silentblocs montés dans des lumières formées dans la plaque de fixation 32.

La première plaque 14A et la seconde plaque 14B comportent chacune une série d'orifices 40A, 40B qui sont répartis autour d'un trou central 42A, 42B.

Lorsque les deux plaques 14A et 14B sont en vis-à-vis avec leurs contours respectifs alignés, les orifices 40A, 40B et les trous 42A, 42B sont en concordance, de manière à permettre respectivement le passage des corps de moyens d'assemblage des deux plaques et le passage à travers les trous 42A, 42B de l'arbre de sortie 13 du groupe motoréducteur fixe sur la plaque support 14 en deux parties 14A et 14B.

Selon un mode de réalisation préféré de l'invention, les moyens d'assemblage entre les deux plaques 14A et 14B ne sont pas réservés à ce seul usage mais ils constituent également les moyens d'assemblage du groupe motoréducteur sur la plaque support en deux parties.

Il s'agit par exemple de vis 15 appartenant au corps du groupe motoréducteur qui traversent les orifices alignés 40A et 40B et dont les extrémités libres filetées reçoivent des écrous de serrage 17.

Ainsi, le montage du groupe motoréducteur sur la plaque support en deux parties 14A, 14B et son assemblage au moyen des écrous de serrage assurent simultanément la liaison rigide entre les deux plaques 14A et 14B reconstituant ainsi une platine support 10 réalisée sous la forme du premier sous-ensemble constitué par le tube de structure 12 et la première plaque 14A et d'un second sous-ensemble constitué par la seconde plaque 14B avec sa patte de fixation en une seule pièce 32.

Selon une autre caractéristique de l'invention, et afin de réduire la transmission de vibrations parasites du mécanisme d'essuie-glace en direction de la caisse du véhicule, et donc de l'habitacle de ce dernier, une plaque 14C formant amortisseur est interposée entre les faces en vis-à-vis 44A et 44B des plaques 14A et 14B.

Comme on peut le voir sur la figure 2, la plaque 14C formant amortisseur est par exemple une plaque en matériau élastomère de contour complémentaire de celui des plaques 14A et 14B et qui comporte des orifices 40C et un trou central 42C qui, en position montée de la plaque d'amortissement 14C entre les deux plaques 14A et 14B, sont alignés respectivement avec les orifices 40A, 40B et les trous 42A, 42B.

La mise en place de la plaque support 14C est particulièrement aisée lors de l'assemblage des différents composants constituant la platine-support 10 et sa fixation définitive entre les deux plaques est assurée simultanément avec la liaison entre ces deux dernières par l'intermédiaire des organes (15, 17) d'assemblage du groupe motoréducteur sur la platine-support 10.

Grâce à l'agencement selon l'invention, la plaque support 14 est réalisée en deux pièces de formes relativement simples et il est possible de standardiser certains composants, c'est-à-dire soit la première plaque 14A avec ses moyens pour la fixation sur le tube de structure 12 et/ou la seconde plaque 14B avec sa patte de fixation 32, l'appariement de différentes première et seconde plaques 14A, 14B permettant de réaliser des platines-supports 10 de géométries globales différentes en fonction des nécessités pour le montage d'un mécanisme d'essuie-glace sur un véhicule automobile.

Selon une variante de réalisation non représentée sur les figures, il est possible de prévoir dans la seconde plaque 14B, par exemple au voisinage de son bord 30, une partie déformée constituant un second demi-logement de forme cylindrique complémentaire du demi-logement constitué par la portion latérale 28 de la première plaque 14A de manière que, après assemblage, ces deux demi-logements constituent un logement qui reçoit un tronçon du tube de structure 12.

Un tel agencement permet de rigidifier l'ensemble, des moyens d'immobilisation en translation et en rotation du tube de structure 12 pouvant être formés par exemple dans le demi-logement formé dans la seconde plaque 14B.

## Revendications

1. Platine-support (10) d'un mécanisme d'essuie-glace, du type comportant une plaque support (14) formant support pour divers composants du mécanisme, notamment pour des organes d'entraînement d'un essuie-glace, et qui comporte des moyens (32) pour sa fixation sur un élément de la caisse du véhicule, et du type comportant au moins un élément de structure (12) de forme allongée fixé à la plaque support (14) et dont un tronçon d'extrémité libre (18) porte un palier (20) de support pour un arbre d'essuie-glace (22), caractérisée en ce que la plaque support (14) est réalisée sous la forme de deux plaques superposées (14A, 14B) dont la première plaque (14A) est fixée à l'élément de structure (12) et dont la seconde plaque (14B) comporte lesdits moyens (32) pour la fixation de la platine-support (10) sur un élément de la caisse du véhicule, et en ce qu'elle comporte des moyens de liaison des deux plaques.

2. Platine-support selon la revendication 1, caractérisée en ce que les moyens de liaison des deux plaques sont constitués par des moyens d'assemblage, notamment du type vis-écrou, pour le montage sur la plaque-support (14, 14A, 14B) d'un organe d'entraînement de l'essuie-glace dont les corps traversent les deux plaques superposées (14A, 14B).

3. Platine-support selon la revendication 2, caractérisée en ce que l'organe d'entraînement est un motoréducteur d'entraînement monté sur la platine (10) par une série d'ensembles du type vis-écrou répartis autour d'un trou (42A, 42B), formé dans les deux plaques superposées (14A, 14B), pour le passage de l'arbre de sortie du groupe motoréducteur.

4. Platine-support selon l'une quelconque des revendications précédentes, caractérisée en ce que la première plaque (14A) s'étend sensiblement dans un plan et se prolonge par une portion latérale (28) pour sa fixation sur l'élément de structure (12).

5. Platine-support selon la revendication 4, caractérisée en ce que la portion latérale (28) de fixation de la première plaque (14A) est conformée pour épouser au moins en partie la forme de l'élément de structure (12) sur lequel elle est fixée.

6. Platine-support selon l'une quelconque des revendications précédentes, caractérisée en ce que la seconde plaque (14B) s'étend sensiblement dans un plan et se prolonge par une patte latérale (32) pour sa fixation sur la caisse du véhicule.

7. Platine-support selon la revendication 6, caractérisée en ce que la patte latérale (32) de fixation de la seconde plaque (14B) s'étend dans un plan sensiblement perpendiculaire à celui de la plaque support.

8. Platine-support selon l'une quelconque des revendications précédentes, caractérisée en ce qu'un élément amortisseur (14C) est interposé entre les deux plaques superposées (14A, 14B).

9. Platine-support selon la revendication 8, caractérisée en ce que l'élément amortisseur est réalisé sous la forme d'une plaque (14C) en matériau élastomère interposée entre des portions complémentaires des faces en vis-à-vis (44A, 44B) des deux plaques superposées (14A, 14B).

10. Platine-support selon l'une des revendications 8 ou 9 prise en combinaison avec la revendication 2, caractérisée en ce que l'élément amortisseur (14C) comporte des orifices (42C) pour le passage des corps des moyens d'assemblage.

11. Platine-support selon l'une des revendications 8 ou 9 prise en combinaison avec la revendication 3, caractérisée en ce que l'élément amortisseur (14C) comporte un trou (42C) pour le passage de l'arbre de sortie du groupe motoréducteur.

12. Platine-support selon l'une quelconque des revendications précédentes, caractérisée en ce que la plaque support comporte un logement qui reçoit un tronçon de l'élément de structure, et en ce que le logement est constitué par deux demi-logements dont chacun est formé dans l'une des deux plaques superposées et s'ouvre dans le plan de joint des deux plaques superposées.

## Claims

1. A support structure (10) for a screen wiper mechanism, of the type comprising a support plate (14) which constitutes a support for various components of the mechanism, in particular for driving components of a screen wiper, and which includes means (32) for fastening it on a bodywork element of the vehicle, being also of the type comprising at least one structural element (12) of elongate form, which is fixed to the support plate (14) and which has a free terminal portion (18) that carries a bearing (20) for supporting a screen wiper drive spindle (22), characterised in that the support plate (14) is made in the form of two superimposed plate elements (14A, 14B), of which the first plate element (14A) is fixed to the structural element (12), and of which the second plate element (14B) includes the said means (32) for fastening the support structure (10) on a bodywork element of the vehicle, and in that it includes means connecting the two plate elements together.

2. A support structure according to Claim 1, characterised in that the means connecting the two plate elements together consist of assembly means, in particular of the screw and nut type, for mounting on the support plate (14A, 14B) a component for driving the screen wiper, with the bodies of the assembly means extending through the two superimposed plate elements (14A, 14B).

3. A support structure according to Claim 2, characterized in that the driving component is a motorized reduction gear drive unit mounted in the support structure (10) by means of a set of assemblies of the screw and nut type which are distributed around a hole (42A, 42B) formed in the two superimposed plates (14A, 14B), for passage therethrough of the output shaft of the motorized reduction gear unit.

4. A support structure according to any one of the preceding Claims, characterized in that the first plate element (14A) lies substantially in one plane and is extended by a lateral portion (28) for fastening it on the structural element (12).

5. A support structure according to Claim 4, characterized in that the lateral fastening portion (28) of the first plate element (14A) is so configured that it matches, at least partly, the form of the structural element (12) on which it is fixed.

6. A support structure according to any one of the preceding Claims, characterized in that the second plate element (14B) lies substantially in one plane and is extended by a lateral lug (32) for fastening it on the body of the vehicle.

7. A support structure according to Claim 6, characterized in that the lateral fastening lug (32) of the second plate element (14B) lies in a plane substantially at right angles to that of the support plate.

8. A support structure according to any one of the preceding Claims, characterized in that a damping element (14C) is interposed between the two superimposed plate elements (14A, 14B).

9. A support structure according to Claim 8, characterized in that the damping element is made in the form of a plate (14C) of elastomeric material interposed between complementary portions of mutually facing surfaces (44A, 44B) of the two superimposed plate elements (14A, 14B).

10. A support structure according to Claim 8 or Claim 9 taken in combination with Claim 2, characterized in that the damping element (14C) has holes (42C) for passage therethrough of the bodies of the assembly means.

11. A support structure according to Claim 8 or Claim 9 taken in combination with Claim 3, characterized in that the damping element (14C) has a hole (42C) for passage therethrough of the output shaft of the motorized reduction gear unit.

12. A support structure according to any one of the preceding Claims, characterized in that the support plate includes a housing which receives a portion of the structural element, and in that the housing consists of two half housings, each of which is formed in one of the two superimposed plate elements and is open in the plane of the junction of the two superimposed plate elements.

## Patentansprüche

1. Halterung (10) eines Scheibenwischermechanismus, umfassend eine Trägerplatte (14), die einen Träger für verschiedene Bestandteile des Mechanismus bildet, insbesondere für Antriebsorgane eines Scheibenwischers, und die Mittel (32) für ihre Befestigung an einem Element der Karosserie des Fahrzeugs aufweist, und umfassend wenigstens ein Strukturelement (12) mit langgestreckter Form, das an der Trägerplatte (14) befestigt ist und von dem ein freies Endstück (18) ein Stützlager (20) für eine Scheibenwischerwelle (22) trägt, **dadurch gekennzeichnet**, daß die Trägerplatte (14) in Form von zwei übereinander angeordneten Platten (14A, 14B) ausgeführt ist, von denen die erste Platte (14A) am Strukturelement (12) befestigt ist und von denen die zweite Platte (14B) Mittel (32) zur Befestigung der Halterung (10) an einem Element der Fahrzeugkarosserie umfaßt, und daß sie Verbindungsmittel für die beiden Platten umfaßt.

2. Halterung nach Anspruch 1, **dadurch gekennzeichnet,** daß die Verbindungsmittel für die beiden Platten aus Zusammenbaumitteln, insbesondere des Typs Schraube-Mutter, für die an der Trägerplatte (14, 14A, 14B) vorgenommene Anbringung eines Antriebsorgans des Scheibenwischers bestehen, deren Körper durch die beiden übereinander angeordneten Platten (14A, 14B) hindurchgehen.

3. Halterung nach Anspruch 2, **dadurch gekennzeichnet**, daß das Antriebsorgan ein Antriebsgetriebemotor ist, der an der Halterung (10) durch eine Reihe von Baueinheiten des Typs Schraube-Mutter angebracht ist, die um ein Loch (42A, 42B) herum verteilt sind, das in den beiden übereinander angeordneten Platten (14A, 14B) ausgebildet ist, um den Durchgang der Ausgangwelle der Getriebemotorgruppe zu ermöglichen.

4. Halterung nach einem der vorangehenden Ansprüche, **dadurch gekennzeichnet,** daß sich die erste Platte (14A) in etwa in einer Ebene erstreckt und durch einen seitlichen Abschnitt (28) für ihre Befestigung am Strukturelement (12) verlängert wird.

5. Halterung nach Anspruch 4, **dadurch gekennzeichnet,** daß der seitliche Befestigungsabschnitt (28) der ersten Platte (14A) so gestaltet, daß er sich wenigstens teilweise an die Form des Strukturelements (12) anpaßt, an dem er befestigt ist.

6. Halterung nach einem der vorangehenden Ansprüche, **dadurch gekennzeichnet**, daß sich die zweite Platte (14B) in etwa in einer Ebene erstreckt und durch einen seitlichen Ansatz (32) für ihre Befestigung an der Karosserie des Fahrzeugs verlängert wird.

7. Halterung nach Anspruch 6, **dadurch gekennzeichnet,** daß sich der seitliche Befestigungsansatz (32) der zweiten Platte (14B) in einer Ebene erstreckt, die in etwa senkrecht zu derjenigen der Trägerplatte verläuft.

8. Halterung nach einem der vorangehenden Ansprüche, **dadurch gekennzeichnet,** daß zwischen den beiden übereinander angeordneten Platten (14A, 14B) ein Dämpfungselement (14C) eingefügt ist.

9. Halterung nach Anspruch 8, **dadurch gekennzeichnet,** daß das Dämpfungselement in Form einer Platte (14C) aus Elastomermaterial ausgeführt ist, die zwischen formschlüssigen Abschnitten der gegenüberliegenden Flächen (44A, 44B) der beiden übereinander angeordneten Platten (14A, 14B) eingefügt ist.

10. Halterung nach einem der Ansprüche 8 oder 9 in Kombination mit Anspruch 2, **dadurch gekennzeichnet,** daß das Dämpfungselement (14C) Öffnungen (42C) für den Durchgang der Körper der Zusammenbaumittel enthält.

11. Halterung nach einem der Ansprüche 8 oder 9 in Kombination mit Anspruch 3, **dadurch gekennzeichnet,** daß das Dämpfungselement (14C) ein Loch (42C) für den Durchgang der Ausgangswelle der Getriebemotorgruppe enthält.

12. Halterung nach einem der vorangehenden Ansprüche, **dadurch gekennzeichnet,** daß die Trägerplatte eine Aufnahme enthält, die ein Teilstück des Strukturelements aufnimmt, und daß die Aufnahme aus zwei Aufnahmehälften besteht, die jeweils in einer der beiden übereinander angeordneten Platten ausgebildet und in der Verbindungsfläche der beiden übereinander angeordneten Platten offen sind.
